Europäisches Patentamt

(19) European Patent Office

Office européen des brevets

(11) Publication number: 0 154 450
A1

## (12) EUROPEAN PATENT APPLICATION

(21) Application number: 85301159.1

(22) Date of filing: 21.02.85

(51) Int. Cl.⁴: H 02 H 3/33
H 02 H 11/00

(30) Priority: 23.02.84 GB 8404766

(43) Date of publication of application:
11.09.85 Bulletin 85/37

(84) Designated Contracting States:
AT DE FR GB

(71) Applicant: DELTA ELECTRICAL (HOLDINGS) LIMITED
1 Kingsway
London WC2B 6XF(GB)

(72) Inventor: Horton, Henry Charles
Glasfryn Ravenspoint Road Treaddur Bay
Holyhead Gwynedd, LL65 2YU(GB)

(74) Representative: Kirk, Geoffrey Thomas et al,
BATCHELLOR, KIRK & EYLES 2 Pear Tree Court
Farringdon Road
London EC1R 0DS(GB)

(54) Earth leakage protective circuit.

(57) An earth leakage protective circuit has a contact breaker with its contacts (CB) in the live line (L) of the current supply. The coil (LI) of the circuit breaker has connected with it a semiconductor switch (CSR1) which is rendered conducting when earth leakage is detected by a circuit including a balance transformer (CT2) and an IC amplifier (IC1). To protect the load circuit additionally against loss of neutral, a second semiconductor switch (CSR2) is connected in series with the coil (L1). The second switch is controlled by a detector circuit (R9, D8, R12) which renders it conducting when the neutral supply line (N) becomes open-circuit, so that the circuit breaker contacts (CB) are opened.

./...

Croydon Printing Company Ltd.

EP 0 154 450 A1

*Fig.I.*

## EARTH LEAKAGE PROTECTIVE CIRCUIT

This invention relates to an earth leakage protective circuit designed to isolate a load circuit from an electrical supply on the occurrence of leakage of current from the load circuit to earth. In particular, the invention is concerned with an improvement in a known earth leakage protective circuit comprising a contact breaker intended to have its contacts in a supply line, a switching device connected with the coil of the contact breaker to provide, when operated, a path for current through the coil, and means for detecting earth leakage and for controlling the switching device to cause the contacts to open when earth leakage occurs.

Should the neutral supply line become open circuit, most protective circuits of the type described become incapable of continuing to provide protection for the load circuit. Although there have been proposals for additional circuit elements designed to isolate the load in that event, those proposals have not been entirely satisfactory in that they have resulted in undue expense and lack of compactness.

An aim of the present invention is to provide protection against loss of the neutral supply by the addition of a relatively simple additional circuit.

To that end, the earth leakage protective circuit of the present invention has a second switching device connected to provide, when operated, a second path for current through the coil of the contact breaker in the event of loss of neutral supply.

The second switching device is preferably a semiconductor connected in series with the coil and controlled by a detector circuit for detecting loss of neutral supply. The detector circuit is preferably connected between earth and a line which is normally at the potential of the neutral line but the potential of which rises when the neutral supply line becomes open circuit, and employs the change in potential to turn on the second switching device. Advantageously, the detector circuit contains a non-linear impedance element which maintains a high impedance until the voltage between the lines exceeds a given value.

The invention will be more readily understood by way of example from the following description of an earth leakage circuit breaker having provision for the detection of loss of incoming neutral, reference being made to the accompanying drawings, wherein:

Figure 1 shows a diagram of a circuit for a single phase supply, and

Figure 2 shows a diagram of a similar circuit for multi-phase supply.

The supply circuit to be protected is represented by the live and neutral lines L and N which are connected at their left hand ends to the supply and at their right hand ends to the load. Earth leakage is detected by a current balance transformer CT2 surrounding both lines, and having no output when there is no leakage to earth and the currents in the lines are balanced. The output of the current balance transformer is applied by an electronic circuit to a switch, exemplified in the drawing as a thyristor CSR1, in series with the tripping coil L1 of a contact breaker having contacts CB in line L. When there is earth leakage causing an imbalance of current between the supply lines, the output from transformer CT2 feeds the electronic circuit, switch CSR1 is opened, current passes through coil L1, and the contacts CB open to cut off the supply to the load.

A second switch, shown as a thyristor CSR2, is connected to earth line E in series with tripping coil L1 and is closed when the neutral supply to line N is lost. When that happens, current again passes through tripping coil L1 and contacts CB are again opened to isolate the load.

Considering the circuit in detail, a rectifier circuit, shown as a full-wave rectifier formed by rectifiers D2 - D5, is connected across lines L and N and supplies potential between lines +V and OV1; in normal operation line OV1 is at earth potential. The secondary winding of current balance transformer CT2 is connected across capacitor C3, resistor R6 and thermistor R16 and the voltage across those components is applied through resistor R5 to an integrated circuit operational amplifier IC1 supplied from lines +V and OV1. A feed-back loop is provided from the output of amplifier IC1 to the negative input thereof. The output of amplifier IC1 is applied to the gate/base of thyristor CSR1 which is connected in series with tripping coil L1 between lines +V and OV1.

The second switch CSR2 is connected between coil L1 and line OV2 which is itself connected to earth line E through diode D1. The gate of thyristor CSR2 is connected to line OV1 through resistor R9 and Zener diode D8 and to line OV2 through resistor R12 and capacitor C6 in parallel.

In normal operation and with no earth leakage, the input voltage to amplifier IC1 is zero, switch CSR1 remains open, and the contact breaker CB is not tripped. When earth leakage occurs, the resulting voltage across resistor R6 opens switch CSR1, the contact breaker CB is tripped and the load is disconnected from the supply. While the supply remains connected to line N, neutral and earth lines N and E are at similar potentials and consequently lines OV1 and OV2 are at similar potentials. Negligible current flows through resistor R9 and Zener diode D8 and switch CSR2 remains off.

If the neutral supply to line N becomes open circuit, the return path for line OV1 is lost, the potential of that line rises through resistors R2, R14, R15, and R4 to that of line +V, and the current return from amplifier IC1 is lost.

Switch CSR1 then cannot be operated to trip the contact breaker. However, when the voltage difference between lines QV1 and OV2 reaches the breakdown voltage of diode D8, current flows to the gate of switch CSR2 to turn it on, current then flowing through coil L1 to trip the contact breaker and isolate the supply.

Zener diode D8 operates normally to maintain a high impedance between lines OV1 and OV2 but provides a low impedance when the potential difference between those lines attains the diode break-down voltage.

Voltage dependent resistor R1 provides protection of the electronic circuitry from mains-borne voltage transients. Current transformer CT1 and resistor R13 are provided to facilitate tripping of the circuit breaker CB under neutral/earth fault conditions by injecting current into the neutral/earth fault loop.

Modifications may be made to the circuit. Thus, half-wave rectification may be employed in place of the full wave rectification provided by diodes D2 - D5, in which case the need for diode D1 is eliminated. Also transistors may be used in place of thyristors CSR1, CSR2.

Resistors R2, R14 and R15 are used to drop the supply voltage to a level appropriate to the electronic circuit. This function may alternatively be implemented by a single resistor or capacitor or by a series of series-parallel arrangement of resistors and/or capacitors.

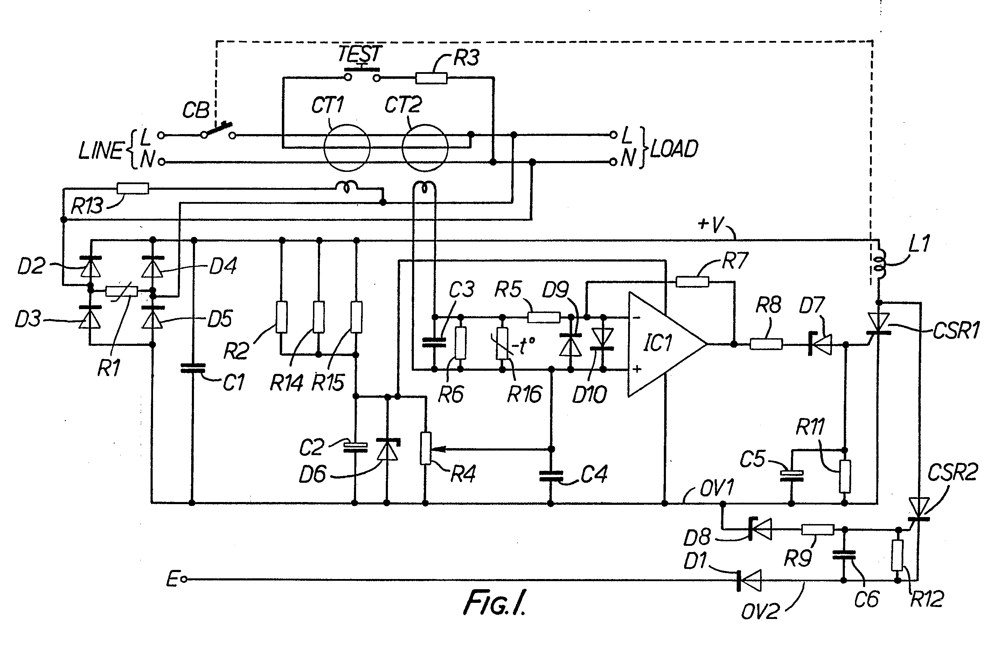

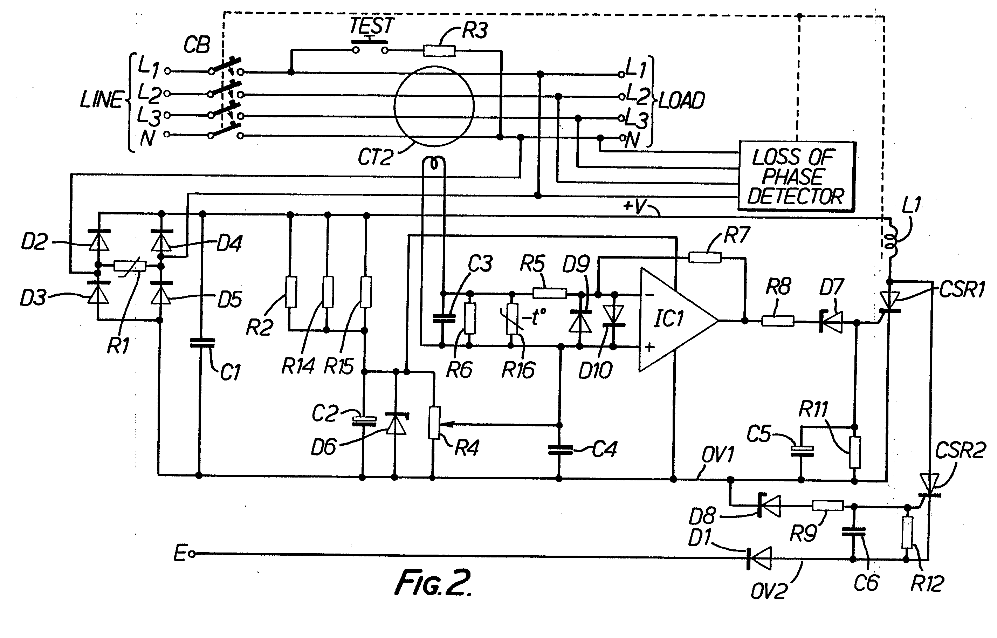

The circuit diagram of Figure 1 shows a contact breaker having a single set of contacts in the line conductor. For a multiphase system as shown in Figure 2, a contact breaker having two or more sets of contacts may be employed. If the neutral conductor is switched, the contacts are arranged so that, when closing, the neutral connection is made first. All line conductors, including the neutral will pass through the balance transformer CT2. The circuit of Figure 2 is substantially the same as the circuit of Figure 1 and like numerals indicate like parts. The description of Figure 1 may be consulted for the operation of those same parts.

As will be appreciated, when used in polyphase applications, an appropriate rectifier arrangement is used and a loss of phase detector added, as shown in Figure 2. The operation in respect of the loss of neutral remains the same.

The protective circuit may be used with, for example, a miniature circuit breaker, moulded case circuit breaker or socket outlet. It may also be utilised independently of any other device.

## CLAIMS

1.    An earth leakage protective circuit comprising a contact breaker (CB, L1) intended to have its contacts (CB) connected in a supply line (L), a switching device (CSR1) connected with the coil (L1) of the contactor breaker to provide, when operated, a path for current through the coil (L1), and means (CT2, IC1) for detecting earth leakage and for controlling the switching device (CSR1) to cause the contacts (CB) to open when earth leakage occurs; characterised in that a second switching device (CSR2) is connected to provide, when operated, a second path for current through the contact breaker coil (L1) in the event of loss of the neutral supply.

2.    An earth leakage protective circuit according to claim 1, in which a detector circuit (R9, D8, R12) is arranged to detect loss of the neutral supply and is connected to operate the second switching device (CSR2) on detection of that loss.

3.    An earth leakage protective circuit according to claim 2, in which the detector circuit (R9, D8, R12) is connected between an earth line (E) and a line (OV1) which is normally at the potential of the neutral supply line (N) but the potential of which rises when the neutral supply line becomes open circuit, and responds to the change in potential to operate the second switching device (CSR2).

4. An earth leakage protective circuit according to claim 3, in which the detector circuit includes a non-linear impedance device (D8) which maintains a high impedance until the voltage between the earth line (E) and the line (OV1) normally at the neutral potential exceeds a given value.

5. An earth leakage protective circuit according to claim 3 or claim 4, in which the line (OV1) normally at neutral potential is connected through a resistance (R2, R14, R15, R4) to a further line (+V) which, in operation, is at the potential of the live  supply line (L).

6. An earth leakage protective circuit according to any one of the preceding claims, in which the second switching device (CSR2) is a semiconductor in series with the coil.

7. An earth leakage protective circuit according to any one of claims 2 to 5, in which the second switching device is a thyristor (CSR2) and the detector circuit (R9, D8, R12) is arranged to control the current to the gate of the thyristor.

8.    An earth leakage protective circuit according to any one of the preceding claims, in which the contact breaker (CB, L1) has two or more pairs of contacts, and is arranged so that the neutral connection is made first.

Fig.1.

0154450

Fig.2.

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| X | US-A-4 011 483 (S.K. MEADOWS) <br> * Column 2, lines 15-68; figure 1, no. 28,30,31,33 * | 1 | H 02 H 3/33 <br> H 02 H 11/00 |
| A | | 8 | |
| A | US-A-3 697 808 (J.CH. LEE) <br> * Figure 1, no. 40,42-44 * <br> --- | 1 | |
| A | US-A-4 024 436 (W. H. ADAMS) <br> * Abstract; figure 4 * <br> --- | | |
| A | DE-B-2 526 649 (ELECTROMAGNETIC INDUSTRIES) <br> * Claim 1; figure * <br> ----- | | |

**TECHNICAL FIELDS SEARCHED (Int. Cl.4)**

H 02 H 3/16
H 02 H 3/33
H 02 H 11/00

The present search report has been drawn up for all claims

| Place of search | Date of completion of the search | Examiner |
|---|---|---|
| BERLIN | 15-05-1985 | LEMMERICH J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO Form 1503. 03.82